Europäisches Patentamt

European Patent Office

Office européen des brevets

(19)

(11) Veröffentlichungsnummer : **0 073 903**
**B1**

(12) # EUROPÄISCHE PATENTSCHRIFT

(45) Veröffentlichungstag der Patentschrift :
01.10.86

(21) Anmeldenummer : 82106286.6

(22) Anmeldetag : 14.07.82

(51) Int. Cl.⁴ : **G 08 C 23/00**

(54) **Vorrichtung zur kontaktlosen Übertragung von Informationen zwischen relativ zueinander rotierenden Bauteilen.**

(30) Priorität : 04.09.81 CH 5714/81

(43) Veröffentlichungstag der Anmeldung :
16.03.83 Patentblatt 83/11

(45) Bekanntmachung des Hinweises auf die Patenterteilung : 01.10.86 Patentblatt 86/40

(84) Benannte Vertragsstaaten :
AT BE CH DE FR GB IT LI NL SE

(56) Entgegenhaltungen :
CH-A-   598 574
GB-A-   880 227
US-A- 3 876 998
US-A- 4 011 551

(73) Patentinhaber : CONTRAVES AG
Schaffhauserstrasse 580
CH-8052 Zürich (CH)

(72) Erfinder : Pedrazza, Donatus
Hürststrasse 77
CH-8046 Zürich (CH)

**Beschreibung**

Die Erfindung betrifft eine Vorrichtung zur kontaktlosen Uebertragung von elektrischen Signalen zwischen zwei im Abstand zueinander angeordneten, mit elektrischen Leiterteilen versehenen und um eine Achse rotierenden Bauteilen.

Zur Uebertragung von elektrischen Signalen zwischen relativ zueinander rotierenden Teilen sind Schleifringe mit elektrischen Kontaktmitteln gut bekannt. Diese haben jedoch den Nachteil, dass Uebermittlungsfehler durch Stromunterbrüche oder Widerstandsänderungen, verursacht durch Staub, Kohleabrieb, Fett, Oel und durch mechanische Vibrationen auftreten. Dieser Nachteil kann durch den Bau kontaktloser Uebertragungsvorrichtungen beseitigt werden. So ist durch die CH-PS 598 574 eine Vorrichtung zur kontaktlosen Uebertragung von Wechselstromsignalen zwischen relativ zueinander rotierenden Teilen bekannt, die zwei Transformation mit je zwei Wicklungen aufweist, wobei bei jedem Transformator die eine Wicklung relativ zur anderen rotierbar angeordnet ist. Mit einer solchen Vorrichtung können hohe Grenzfrequenzen, bedingt durch die hohen Induktivitäten der Transformatorwicklungen, nicht erreicht werden. Weiter sind, um ein Uebersprechen zu vermeiden, grosse Abstände zwischen den Transformatoren erforderlich, was den Bau einer kompakten Vorrichtung mit kleinem Raumbedarf verunmöglicht. Ein weiterer Nachteil ist, dass Montage, Reparatur sowie das Auswechseln von Teilen schwierig und zeitaufwendig sind.

Es ist deshalb Aufgabe der Erfindung, eine Vorrichtung der eingangs genannten Gattung zu schaffen, mit der Grenzfrequenzen bis zu etwa 1 000 MHz, eine hohe Uebertragungszuverlässigkeit, ein kleiner Raumbedarf bei günstigen Herstellungskosten sowie einfache Montage und Reparatur erreicht werden.

Die Aufgabe wird dadurch gelöst, dass zwischen den beiden rotierenden, senkrecht zur Achse angeordneten und als Platte ausgebildeten Bauteilen ein als Abnehmerplatte ausgebildetes Bauteil ortsfest angeordnet ist, und dass die beiden den elektrischen Leiterteilen der rotierenden Bauteile zugewandten Flächen der feststehenden Abnehmerplatte zur Erzeugung eines toroidalen elektrischen und/oder magnetischen Feldes mit korrespondierend angeordneten, elektrischen Leiterteilen versehen sind.

Weitere erfindungsgemässe Ausführungen ergeben sich aus den Unteransprüchen.

Im folgenden wird anhand der Zeichnung die Ausführung der Erfindung näher beschrieben. Es zeigen :

Figur 1 eine perspektivische Sicht auf die Anordnung, wobei zur besseren Sichtbarkeit einige Teile geschnitten und nur teilweise gezeichnet sind,

Figur 2 einen Querschnitt durch die Anordnung entlang der Linie II-II der Fig. 1,

Figur 3 einen zugehörigen Schaltplan.

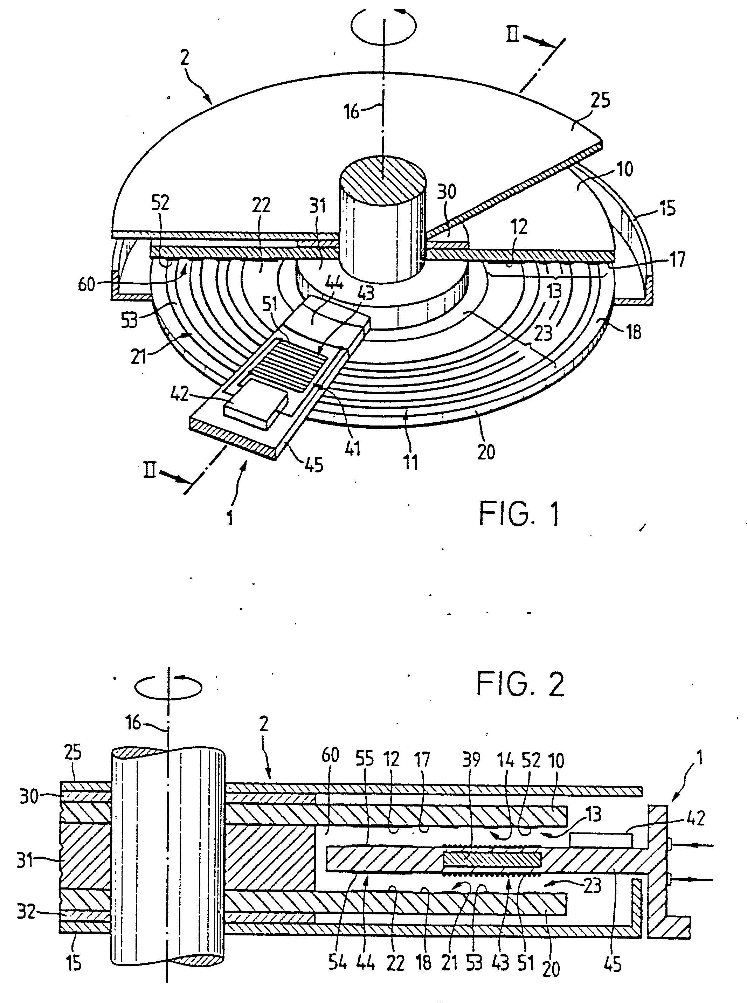

Die Fig. 1 zeigt, in axialer Richtung betrachtet, eine erfindungsgemässe Vorrichtung mit einer zweiten Baugruppe 2, die rotierbar um eine Achse 16 gelagert ist, sowie einer ersten Baugruppe 1, die ortsfest montiert ist. Die zweite, im wesentlichen rotationssymmetrische Baugruppe 2 ist aufgebaut aus einer unteren Trägerplatte 20 mit einem unteren Leiterteil 23 und einer dazu parallel angeordneten oberen Trägerplatte 10 mit einem oberen Leiterteil 13. Beide Trägerplatten 10 und 20 sind von einer unteren und einer oberen Abschirmplatte 15 und 25 gegen aussen elektromagnetisch abgeschirmt. Die beiden Leiterteile 13 und 23 sind auf den inneren, einander gegenüberliegenden Flächen 17 und 18 der Trägerplatten 10 und 20 angeordnet, und bestehen je aus einer Kondensatorplatte 12 und 22 und je einer Spule 14 und 21, deren Windungen 52 und 53 in Ebenen senkrecht zur Achse 16 liegen. Die untere und die obere Spule 14 und 21 weisen entgegengesetzte Wickelrichtungen auf und sind parallel geschaltet, womit erreicht wird, dass sich die magnetischen Felder beider Spulen 14 und 21 zu einem toroidalen Feld addieren. Die gleiche Wirkung wird erzielt, wenn bei gleichen Wickelrichtungen die Spulen kreuzweise geschaltet werden. Näher zur Achse 16, aber in denselben Ebenen wie die Spulen 14 und 21 sind die Kondensatorplatten 12 und 22 auf den Trägerplatten 10 und 20 angeordnet. Die paarweise, symmetrische Anordnung der Spulen und Kondensatorplatten der zweiten Leiteranordnung 11 hat den wesentlichen Vorteil, dass äussere elektrostatische und elektromagnetische Störungen mindestens teilweise durch Kompensation unwirksam gemacht werden.

Der erste Bauteil 1 enthält auf einer Abnehmerplatte 45 die erste Leiteranordnung 41, bestehend aus einer Kondensatorplatte 44 sowie einer Spule 43, die vorzugsweise mit einem Ferritkern 39 (Fig. 2), aber auch als Luftspule ausgebildet sein kann. Die Abnehmerplatte 45 und die erste Leiteranordnung 41 sind berührungslos in einem Sektor des rotationssymmetrischen Raumes 60 zwischen den beiden Leiterteilen 13 und 23 der zweiten Leiteranordnung 11 angeordnet. Bei der Montage kann der erste Bauteil, beziehungsweise die Abnehmerplatte 45, auf einfache Weise von aussen eingeschoben werden, und bei einer Reparatur ohne den Einsatz von speziellen Werkzeugen ausgewechselt werden. Der ersten Leiteranordnung 41 ist ein elektrischer Verstärker 42 vorgeschaltet, der hier raumsparend auf der Abnehmerplatte 45 montiert ist. Die mittlere Kondensatorplatte 44 liegt in paralleler Anordnung zwischen der unteren und der oberen Kondensatorplatte 12 und 22. Die mittlere Spule 43 befindet sich zwischen der oberen und der unteren Spule 14 und 21 und besteht aus Windungen 51, die im wesentlichen tangential zu den Windungen 52 und 53 der oberen und der unteren Spule 14 und 21 verlaufen.

Die Fig. 2 zeigt einen Querschnitt durch die Vorrichtung entlang der Linie II-II der Fig. 1, wobei die Abschirmplatten 15, 25 ebenfalls eingezeichnet sind. Gut sichtbar ist der sandwichartige Aufbau des zweiten Bauteils 2, dessen Trägerplatten 10, 20, Abschirmplatten 25, 15 und Distanzplatten 30, 31, 32 senkrecht zur Achse 16 angeordnet sind. Zwischen den beiden Trägerplatten 10, 20 ist der Raum 60 sichtbar, der im wesentlichen rotationssymmetrisch ist, und in dem die erste Leiteranordnung 41 berührungslos angeordnet ist. Die mittlere Kondensatorplatte 44 besteht aus einem oberen und einem unteren Teil 55, 54, die beide elektrisch leitend verbunden sind.

Die Kondensatorplatten 12, 22, 44 und die Spulen 14, 21, 43 können als gedruckte Leiterzüge, die Trägerplatten 10, 20 und die Abnehmerplatte 45 als Platinen entsprechend der gut bekannten Technik zur Herstellung von Leiterplatten kostengünstig und mit hoher Zuverlässigkeit hergestellt werden. Als Materialien für die Träger- und Abnehmerplatten sind ausser den in der Leiterplattentechnik verwendeten Materialien Glas, Keramik und andere nichtleitende Materialien geeignet.

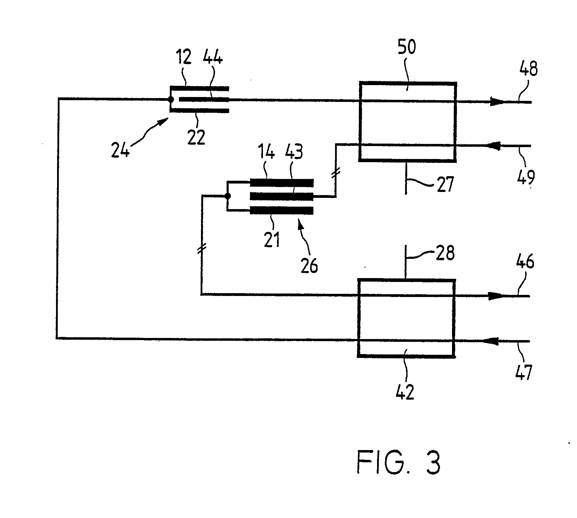

In der Figur 3 ist eine zugehörige Schaltung dargestellt, mit zwei Verstärkern 42, 50 mit je einem Signaleingang 47, 49 und einem Signalausgang 46, 48, dem Kondensator 24 mit den beiden äusseren und der inneren Kondensatorplatte 12, 22, 44, der Spulenanordnung 26 mit den beiden äusseren und der inneren Spule 14, 21, 43. Beide Verstärker 42, 50 werden über je eine elektrische Leitung 27, 28 gespiesen. Wo erforderlich werden Koaxialkabel verwendet. Die erfindungsgemässe Vorrichtung ist für Daten- als auch für Videoübertragungen geeignet, wobei in an sich bekannter Weise zusätzliche Baugruppen und Bauelemente wie Multiplexer, Oszillatoren und Filter verwendet werden.

Die Uebertragungsleistung kann erhöht werden, indem mehrere Trägerplatten, beziehungsweise Leiteranordnungen verwendet werden, wobei zwischen zwei Trägerplatten in der einen Richtung kapazitiv, und zwischen zwei anderen Trägerplatten in der anderen Richtung induktiv übertragen wird. Ebenfalls können zwischen zwei Trägerplatten mehrere Abnehmerplatten angeordnet werden, deren Leiteranordnungen wahlweise kapazitiv und/oder induktiv ausgebildet sind.

Die erfindungsgemässe Vorrichtung findet überall dort Anwendung, wo Daten als elektrische Signale zwischen relativ zueinander rotierenden Bauteilen übertragen werden müssen, insbesondere bei Radaranlagen, Panzern und Panzerfahrzeugen mit rotierbarem Turm, Turbinen- und Generatoranlagen sowie Theodoliten.

**Patentansprüche**

1. Vorrichtung zur kontaktlosen Uebertragung von elektrischen Signalen zwischen zwei im Abstand zueinander angeordneten, mit elektrischen Leiterteilen versehenen und um eine Achse rotierenden Bauteilen, dadurch gekennzeichnet, dass zwischen den beiden rotierenden, senkrecht zur Achse (16) angeordneten und als Platte ausgebildeten Bauteilen (10, 20) ein als Abnehmerplatte (45) ausgebildetes Bauteil (1) ortsfest angeordnet ist, und dass die beiden den elektrischen Leiterteilen (13, 23) der rotierenden Bauteile (10, 20) zugewandten Flächen der feststehenden Abnehmerplatte (45) zur Erzeugung eines toroidalen elektrischen und/oder magnetischen Feldes mit korrespondierend angeordneten, elektrischen Leiterteilen (41) versehen sind.

2. Vorrichtung nach Anspruch 1, dadurch gekennzeichnet, dass die elektrischen Leiterteile (13, 23, 41) der Bauteile (1, 10, 20) kapazitiv gekoppelte Kondensatoren (12, 22, 44) und induktiv gekoppelte Spulen (14, 21, 43) sind, die als gedruckte Leiterbahnen ausgebildet und in an sich bekannter Leiterplatten-Technologie (Multilayer) hergestellt sind.

3. Vorrichtung nach Anspruch 1, dadurch gekennzeichnet, dass die aus den elektrischen Leiterteilen (12, 22, 44) gebildete Kondensatoranordnung (24) sowie die aus den elektrischen Leiterteilen (14, 21, 43) gebildete Spulenanordnung (26) mit Verstärkern (42, 50) in Wirkverbindung stehen.

4. Vorrichtung nach einem der vorgehenden Ansprüche 1 bis 3, dadurch gekennzeichnet, dass zur Erreichung eines magnetischen Feldes die Spulen (14, 21) der elektrischen Leiterteile (13, 23) entgegengesetzten oder gleichen Wicklungssinn aufweisen und elektrisch parallel oder kreuzweise geschaltet sind.

5. Vorrichtung nach Anspruch 1, dadurch gekennzeichnet, dass die Bauteile (1, 10, 20) von einer oberen und einer unteren Platte (25, 15) abgeschirmt und in Sandwich-Bauweise ausgebildet, senkrecht zur Achse (16) angeordnet sind.

6. Vorrichtung nach Anspruch 1 und 2, dadurch gekennzeichnet, dass die Spulen (14, 21, 43) und Kondensatoren (12, 22, 44) als ringförmige Leiterbahnen ausgebildet sind, wobei die Spulen in radialer Richtung in grösserem Abstand zu der Achse (16) als die Kondensatoren angeordnet sind.

**Claims**

1. Device for the contactless transmission of electrical signals between two components arranged to be spaced from one another, provided with electrical conductor parts and rotatable round an axis, characterised in that between the two rotary components (10, 20) there is fixedly arranged, extending perpendicularly to the axis (16) and constructed as a plate, a component (1) providing a pick-up plate (45), and in that the two surfaces of the fixed pick-up plate (45) facing the electrical conductor parts (13, 23) of the rotary components (10, 20) are provided with correspondingly arranged electrical conductor parts (41) for the production of a toroidal electrical and/or magnetic field.

2. Device according to claim 1, characterised in that the electrical conductor parts (13, 23, 41) of the components (1, 10, 20) comprise capacitively coupled condensers (12, 22, 44) and inductively coupled coils (14, 21, 43) which are constructed as printed conductors and are produced in accordance with known printed circuit board technology (multilayer).

3. Device according to claim 1, characterised in that the capacitor arrangement (24) formed from the electrical conductor parts (12, 22, 44), and the coil arrangement (26) formed from the electrical conductor parts (14, 21, 43), are operatively connected to amplifiers (42; 50).

4. Device according to one of the preceding claims 1 to 3, characterised in that to achieve a magnetic field the coils (14, 21) of the electrical conductor parts (13, 23) have a winding direction that is opposite or the same, and are electrically connected in parallel or crosswise.

5. Device according to claim 1, characterised in that the components (1, 10, 20) are protected by an upper and a lower plate (25, 15) and are arranged perpendicular to the axis (16) in sandwich construction.

6. Device according to claim 1 and 2, characterised in that the coils (14, 21, 43) and capacitors (12, 22, 44) are constructed as annular printed conductors, wherein the coils in the radial direction are arranged at a greater distance from the axis (16) than the capacitors.

## Revendications

1. Dispositif pour la transmission sans contact de signaux électriques entre deux parties constitutives disposées à une certaine distance l'une de l'autre, munies de parties électriquement conductrices et tournant autour d'un axe, dispositif caractérisé en ce qu'entre les deux parties constitutives tournantes (10, 20) disposées perpendiculairement à l'axe (16) et revêtant la forme de plaques, est disposée à poste fixe une partie constitutive revêtant la forme d'une plaque réceptrice (45), les deux faces, en regard des parties électriquement conductrices (13, 23) des parties constitutives tournantes (10, 20), de la plaque réceptrice fixe (45), étant munies de parties électriquement conductrices (41) disposées de façon correspondante pour engendrer un champ électrique et/ou magnétique toroïdal.

2. Dispositif selon la revendication 1, caractérisé en ce que les parties électriquement conductrices (13, 23, 41) des parties constitutives (1, 10, 20) sont des condensateurs couplés capacitivement (12, 22, 44) et des bobines couplées inductivement (14, 21, 43) qui sont réalisées sous la forme de pistes conductrices imprimées et sont réalisées selon la technologie, connue en soi, des plaques conductrices (multicouches).

3. Dispositif selon la revendication 1, caractérisé en ce que l'ensemble (24) de condensateurs constitué par les parties électriquement conductrices (12, 22, 44), ainsi que l'ensemble (26) de bobines constitué par les parties électriquement conductrices (14, 21, 43) sont en liaison opérationnelle avec des amplificateurs (42, 50).

4. Dispositif selon l'une des précédentes revendications 1 à 3, caractérisé en ce que pour obtenir un champ magnétique, les bobines (14, 21) des parties électriquement conductrices (13, 23) comportent des sens de bobinage opposés ou identiques et sont branchées électriquement en parallèle ou bien de façon croisée.

5. Dispositif selon la revendication 1, caractérisé en ce que les parties constitutives (1, 10, 20), protégées par une plaque supérieure et une plaque inférieure (25, 15) réalisées selon une construction en sandwich, sont disposées perpendiculairement par rapport à l'axe (16).

6. Dispositif selon les revendications 1 et 2, caractérisé en ce que les bobines (14, 21, 43) et les condensateurs (12, 22, 44) revêtent la forme de pistes conductrices annulaires, les bobines étant disposées en direction radiale à une plus grande distance de l'axe (16) que les condensateurs.

0 073 903

FIG. 1

FIG. 2

FIG. 3